# EUROPEAN PATENT APPLICATION

(11) **EP 4 300 233 A1**
(43) Date of publication of application: **03.01.2024**
(21) Application number: 22181256.3
(22) Date of filing: 27.06.2022
(51) Int. Cl.: G05B 23/02

(54) **METHOD FOR GENERATING VISUAL ALARMS IN AN INDUSTRIAL FACILITY**

(71) Applicant: Siemens Aktiengesellschaft, 80333 München (DE)
(72) Inventor: Lutz, Benjamin, 76327 Pfinztal (DE)
(74) Representative: Siemens Patent Attorneys

(57) **Abstract**

The current disclosure describes a method of generating visual alarms in an industrial facility comprising a plurality of sections, each section comprising a plurality of industrial devices. The method comprises generating a first set of graphical objects associated with the plurality of sections, wherein each graphical object from the first set of graphical objects represents a corresponding section, generating a second set of graphical objects associated with the industrial devices, each graphical object from the second set of graphical objects represents an industrial device, generating a hierarchy based on the first set of graphical objects and the second set of graphical objects, , receiving process status indicative of status of one or more industrial devices and updating the hierarchy by annotating one or more graphical objects based on the process status information for displaying the visual alarms.

## Description

### Background:

The current disclosure relates to alarms in industrial facilities, and more particularly, relates to display of alarms in industrial facility. The aim of alarm management and alarm display systems in process engineering systems is that an operator can detect alarms as quickly as possible and navigate to their source. Since there can be thousands of sources of alarms in a process engineering plant, often alarms are condensed into groups and then presented.

### Description:

The current disclosure relates to alarm management and display in industrial automation environments. In a process plant or industrial facility, there may thousands of sources of alarms, often a plurality of alarms may be generated and need to be displayed to the plant personnel. Often alarms are condensed into groups and then presented in a manageable representation. For example, in one approach, alarm message sequence displays only display alarms in a simple sorted lists or in the form of tables. However, such lists and tables can be often large and too detailed for the operator to get insights from the alarms. In another approach, only the most important alarms (limited to 2 to 5) are shown. However, this may lead to operators being unable to establish a connection between the alarms and the system. Accordingly, there is a need for a method and device which addresses the issues mentioned above.

Accordingly, the current disclosure describes a method of generating visual alarms in an industrial facility. The industrial facility comprises a plurality of sections, each section comprising a plurality of industrial devices associated with one or more processes. The method comprises generating a first set of graphical objects associated with the plurality of sections, wherein each graphical object from the first set of graphical objects represents a corresponding section from the plurality of sections, generating a second set of graphical objects associated with the industrial devices, each graphical object from the second set of graphical objects represents an industrial device, generating a hierarchy based on the first set of graphical objects and the second set of graphical objects, wherein each graphical object from the second set of graphical objects is associated with a graphical object from the first set of graphical object, receiving process status information, the process status information indicative of status of one or more industrial devices and updating the hierarchy by annotating one or more graphical objects based on the process status information.

Accordingly, the current disclosure describes a manner for generating and displaying visually alarms using a hierarchy of graphical objects. The hierarchy of the objects reflects the technological structure and technological hierarchy of the industrial facility as generated during engineering. The structural entities of the technological hierarchy are represented using the first set of graphical objects in the hierarchy of objects. The level and nesting of the structural entities according to the engineering data is represented in the hierarchy of the objects. Additionally, the process equipment (represented by the second set of graphical objects) are placed underneath the corresponding objects from the first set of graphical objects associated with the sections in which the process equipment belong. The automatically generated and updated hierarchy of objects provides an alarm overview, which is dynamic at runtime, can be opened by an operator in an Operator Station Client for observation of the plant. Accordingly, alarm management can also be carried out in its entirety by large process plants (several thousand process objects) using the hierarchy of the graphical objects. Additionally, the hierarchy of graphical objects allows for guided prioritization and treatment of alarm.

In an embodiment, each section from the plurality of sections is associated with at least one process from the one or more processes. Accordingly, the logical structure of processes is structured as sections and accordingly used in providing alarm overview. In an example, the method further comprises receiving engineering data associated with the industrial facility from one or more engineering tools, the engineering data comprising information associated with the plurality of sections of the industrial facility. Accordingly, as mentioned above, the hierarchy of the graphical objects using which the alarm overview is presented, is generated automatically using the engineering data without human intervention. This allows for easy deployment of the proposed method in existing plants and industrial facilities.

In an example, annotating the one or more graphical objects includes modifying at least one of a colour and text of a graphical object from the one or more graphical objects based on the process status information. Accordingly, alarm information in relation to the graphical object may be presented using text or colour or a combination of both. In an example, annotating the one or more graphical objects include annotating a first graphical object from the first set of graphical objects based on one or more annotations associated with the one or more industrial devices in the section associated with the at first graphical object. Accordingly, using the process information (including alarm information) in relation to industrial devices, alarm indicators and annotations may be generated for corresponding sections.

In an example, the hierarchy includes a second graphical object and a third graphical object from the first set of graphical objects, wherein the second graphical object is subordinate to the third graphical object. Accordingly, sections may further have subordinate sections. This sectionsubordinate section relationships are represented in the hierarchy as well.

In another aspect, the current disclosure describes an industrial device for generating visual alarms in an industrial facility. The industrial facility comprises a plurality of sections, each section comprising a plurality of industrial devices associated with one or more processes. The industrial device comprises one or more processors connected to a memory module. The one or more processors are configured to generate a first set of graphical objects associated with the plurality of sections, wherein each graphical object from the first set of graphical objects represents a corresponding section from the plurality of sections, generate a second set of graphical objects associated with the industrial devices, each graphical object from the second set of graphical objects represents an industrial device, generate a hierarchy based on the first set of graphical objects and the second set of graphical objects, wherein each graphical object from the second set of graphical objects is associated with a graphical object from the first set of graphical object, receive process status information, the process status information indicative of status of one or more industrial devices and update the hierarchy by annotating one or more graphical objects based on the process status information for displaying the visual alarms.

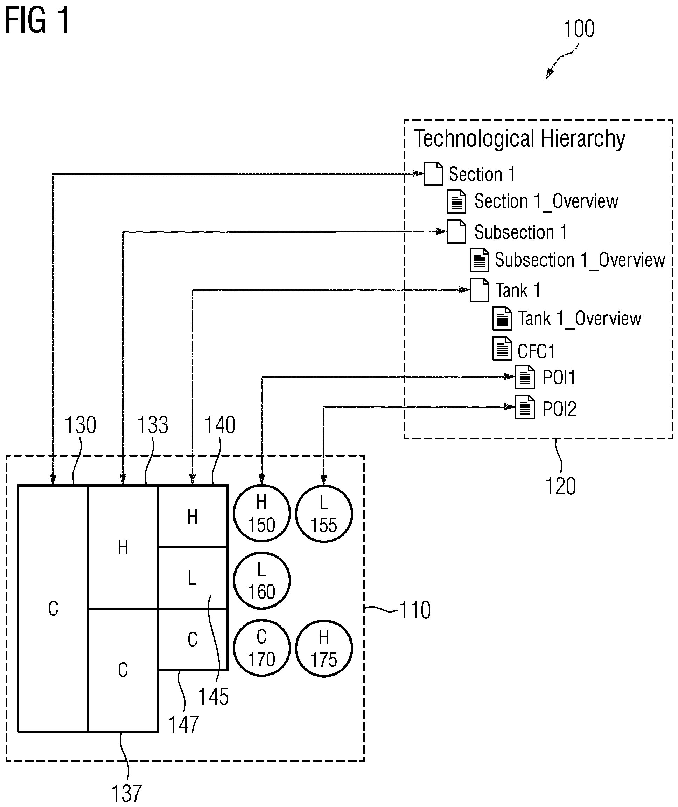

In yet another aspect, the current disclosure describes a non transitory storage medium comprising a plurality of instructions, which when executed on one or more processors, cause the one or more processors to generate a first set of graphical objects associated with the plurality of sections, wherein each graphical object from the first set of graphical objects represents a corresponding section from the plurality of sections, generate a second set of graphical objects associated with the industrial devices, each graphical object from the second set of graphical objects represents an industrial device, generate a hierarchy based on the first set of graphical objects and the second set of graphical objects, wherein each graphical object from the second set of graphical objects is associated with a graphical object from the first set of graphical object, receive process status information, the process status information indicative of status of one or more industrial devices and update the hierarchy by annotating one or more graphical objects based on the process status information for displaying the visual alarms. These aspects are explained further in relation to figures 1-5.
Figure 1 illustrates a hierarchy of graphical objects for a section of an industrial facility for providing an alarm overview;
Figure 2 illustrates generating alarms in an industrial facility;
Figure 3 illustrates an graphical display including hierarchy of graphical objects for section of an industrial facility;
Figure 4 illustrates a visualization server for generating and updating the hierarchy of graphical objects; and
Figure 5 illustrates a device for generating alarms in the industrial facility.

Figure 1 illustrates a hierarchy of graphical objects for a section of an industrial facility, for providing an alarm overview. Industrial facility herein refers to any environment where one or more industrial processes such as manufacturing, refining, smelting, assembly of equipment, etc., may take place. Examples of industrial facility includes process plants, oil refineries, automobile factories, etc. The industrial automation system includes a plurality of industrial devices such as control devices (process controllers, programmable logic controllers, supervisory controllers, operator devices, etc.,), field devices, etc. The controllers are connected directly or via a plurality of peripheral or interface devices, to a plurality of field devices such as actuators and sensor devices for monitoring and controlling industrial processes in the industrial facility. These field devices can include flowmeters, value actuators, temperature sensors, pressure sensors, etc. Based on the process values, the controllers generate control commands for the actuators, for control and regulation of industrial processes in the industrial facility.

The industrial facility comprises a plurality of sections, each section comprising a plurality of industrial devices associated with one or more processes. Section herein refers to a collection of industrial devices which are related to each other. For example, section may refer to a physical section of an industrial facility containing a plurality of equipment associated with digestor tanks. In another example, a section may refer to a logical section containing a plurality of industrial devices which are associated with an industrial process happening in the industrial facility. The sections are created during the engineering of the plant and are known to the person skilled in the art.

Moreover, the industrial facility further includes one or more operator stations for displaying status of the equipment and the processes in the industrial facility. One or more alarms may be displayed on the operator stations. Based on the alarms, the plant operator can take appropriate decisions in the industrial facility, to avoid an undesirable or potentially disastrous situation. Such a decision-making process naturally takes a certain time for completion and has performance limitations both through the operator's experience level and the operator's ability to compare large amounts of data at one time. Accordingly, it is important to provide a clear and comprehensive overview of the alarms for the plant operator to be able effectively control the plant and avoid potential issues.

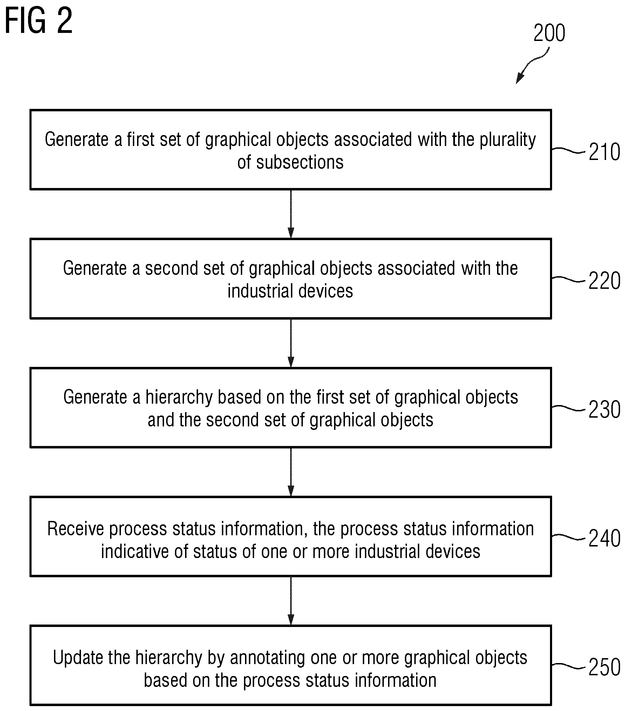

Accordingly, a hierarchy of graphical objects 110 is displayed on the operator station for providing an alarm overview. Using the hierarchy of graphical objects 110, the current disclosure provides for an effective display of alarms (also referred to as visual alarms) which can be generated automatically using engineering data, automatically dynamized at runtime with little computing effort, allows the operator to efficiently navigate interactively to the alarming object and enables the operator to recognize patterns in relation to chained alarms. Moreover, the hierarchy of graphical objects 110 enables the compression of alarm information without obscuration and thereby provides an overall overview of the alarms without overwhelming the operator. This is further explained in reference to figure 2.

Figure 2 illustrates a method 200 of generating visual alarms in an industrial facility. In an example, the method 200 is implemented by a visualization server. Visual alarms herein refers to alarm information which is displayed on operator station (or operator station client). This is distinguished from alarm information which originates from industrial devices such as controllers, sensors, etc. Visual alarm refers to the display populated on the operator screen.

At step 210, the visualization server generates a first set of graphical objects associated with the plurality of sections. Each graphical object from the first set of graphical objects represents a corresponding section from the plurality of sections. As mentioned above, the industrial facility includes a plurality of sections (based on engineering data). Based on the plurality of sections, for each section a graphical object is created. This is explained further in reference to figure 1, in which the first set of graphical objects are rectangular graphical objects.

As shown in figure 1, each rectangular graphical object (130, 133, 137,140, 145 and 147) belongs to the first set of graphical objects. Accordingly, as shown here, each graphical object from the first set of the graphical objects is a rectangular graphical object. Each graphical object from the first set of graphical object represents a section in the industrial facility. For example, as shown in the figure 1, the graphical object 130 represents the section 1 in the industrial facility. The graphical object 133 represents a subsection 1 under the section 1. The graphical object 150 represents a tank 1 in the subsection 1 of the section 1. The first set of graphical objects is generated using a portion of the engineering data 120 as shown in figure 1. The engineering data 120 comprises a plurality of tags, each tag indicative of an entity (logical or physical). Additionally, the plurality of tags are structured in hierarchical fashion to indicate relationships amongst the tags in which the subordinate tags (tags below a tag) belong to the superior tag (the tag above the other tags). The graphical objects are generated on the basis of the tags. Each tag which has tags under it (i.e. a superior tag), is treated as a section and accordingly a graphical object from the first set of graphical objects is generated in respect of the corresponding tag.

Then, at step 220, the visualization server generates a second set of graphical objects associated with the industrial devices. Each graphical object from the second set of graphical objects represents an industrial device. This is further explained in reference to figure 1, in which the second set of graphical objects are circular graphical objects. As shown in figure 1, circular graphical objects 150, 160, 170, 155 and 175 belong to the second set of graphical objects and represent the industrial devices in the industrial facility. For example, as shown in the figure 1, graphical object 150 belongs to a sensor on the tank and graphical object 155 belongs to a valve on the tank. The second set of graphical objects is generated using a portion of the engineering data 120 as shown in figure 1. Particularly, the second set of graphical objects are generated based on tags which do not have subsequent tags under it (i.e., the tag does not have any subordinate tags). For each of such tags with no subordinate tag under it, a corresponding graphical symbol from the second set of graphical symbols is created.

Then, at step 230, the visualization server generates a hierarchy 110 based on the first set of graphical objects and the second set of graphical objects. Each graphical object from the second set of graphical objects is associated with a graphical object from the first set of graphical object. This is further explained in reference to figure 1.

As shown in the figure 1, the engineering data 120 is in a hierarchical structure. This hierarchical structure is replicated amongst the first and second set of graphical objects. Accordingly, each graphical object from the second set of graphical objects, which represents a corresponding industrial device, is stacked or placed under the corresponding graphical object from the first set of graphical objects, which represents the section within which the industrial device is present. For example, the sensor (POI 1) and the valve (POI 2) are present on the tank and accordingly, the graphical objects 150 and 155 associated with the sensor and the valve, is placed under the graphical object 140 associated with the tank. Similarly, the tank is located with the sub section 1 and accordingly, the graphical object 140 is placed under the graphical object 133 associated with the subsection 1. The hierarchy of graphical objects is generated to reflect the structure as present in the engineering data. The superior-subordinate relationships amongst the tags in the engineering data is reflected in the graphical objects.

It may be noted by a person skilled in the art that which the relationship between the graphical objects is shown in the current example on the basis of size of the object and adjacent graphical objects (i.e. stacking), other such representations may also be utilized. In an example, a structured list or tree representation may also be utilized.

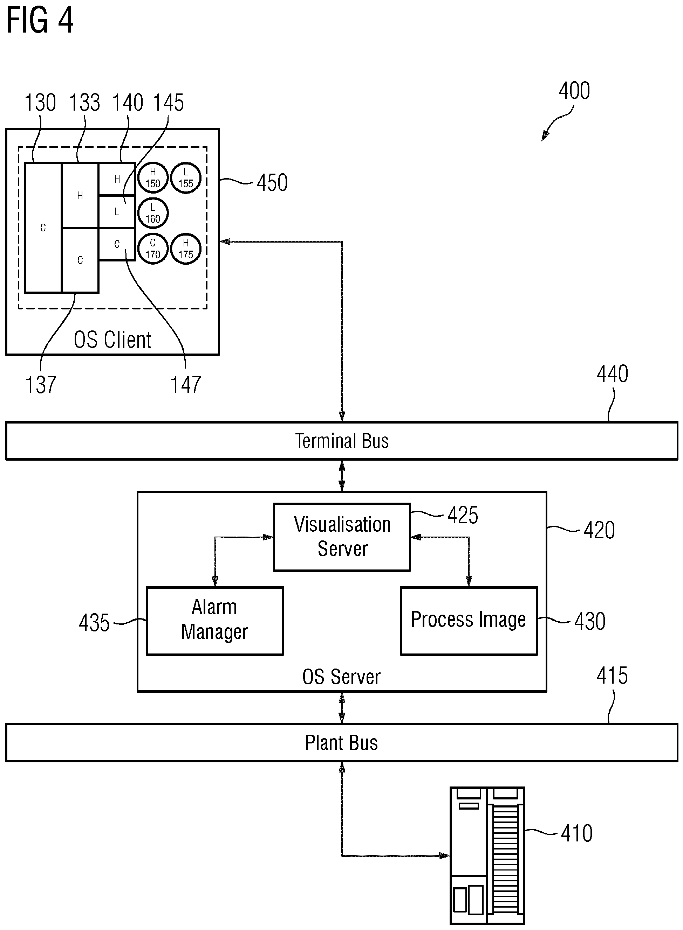

At step 240, the visualization server receives process status information. The process status information is indicative of status of one or more industrial devices. In an example, the process status information includes one or more alarm related information associated with the industrial devices. For example, process status information includes alarms generated by the sensor and valve of the tank. This is further explained in reference to figure 4.

At step 250, the visualization server updates the hierarchy by annotating one or more graphical objects based on the process status information. Annotation herein refers to adding or modifying the attributes of the graphical objects to reflect the process status information. Annotation includes modifying the text or color (or a combination) on the graphical objects. For example, based on the process status information associated with the sensor and the valve, the graphical objects 150 and 155 are annotated to indicate the alarms generated by the sensor and the valve. For example, when a high alarm is generated by the sensor is used to annotate the graphical object 150 with the symbol 'H' . when a low alarm is generated by the valve is used to annotate the graphical object 155 with the symbol 'L'. The first set of graphical objects (i.e. graphical objects representing the sections) are annotated based on the annotations of the second set of graphical objects. For example, the graphical object 140 is annotated based on the annotations associated with graphical object 150 and 155. As mentioned previously, the graphical object 150 is annotated 'H' and the graphical object 155 is annotated 'L'. In an example, the graphical object 140 is annotated based on the annotation with the highest priority from the annotations of the subordinate graphical objects 150 and 155.

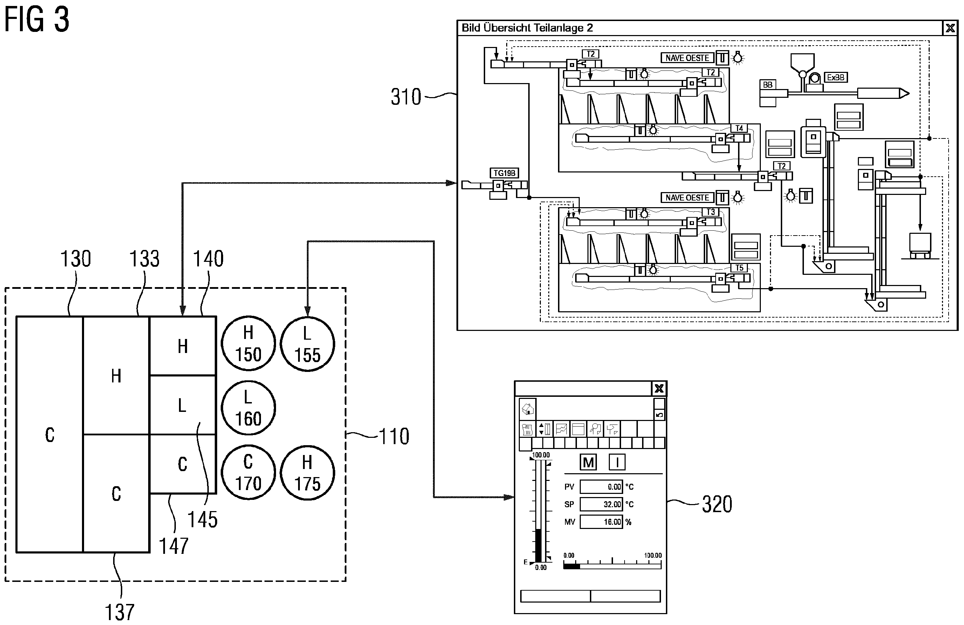

Accordingly, the current disclosure describes a method for generating and displaying visual alarms on an operator station by a visualization server. In an example, the graphical objects as displayed on the operator station, may be further used by the plant operator to obtain additional information in relation to the corresponding industrial devices. This is further illustrated in relation to figure 3.

Figure 3 illustrates a graphical display 300 including hierarchy of graphical objects 110 for section of an industrial facility. The graphical display 300 is displayed on an operator station and each graphical object may be interacted with by the plant operator. For example, the graphical object 155 associated with the valve of the tank may be clicked on, to display a configuration screen 320 associated with the valve. Similarly, the graphical object 140 associated with the tank may be clicked by the operator to display schematics associated with the tank providing an process overview of the tank. Accordingly, the hierarchy of graphical objects may be used to provide further information regarding the sections and the industrial devices associated with the graphical objects. This allows for quick analysis of the process status in relation to the alarms.

Figure 4 illustrates a visualization server 425, for generating and updating the hierarchy of graphical objects. The visualization server 425 is configured to perform the method 200. In an example, the visualization server 425 is realized within an operator station server 420. The operator station server 420 is connected to an operator station client 450 also referred to as (OS client) via a terminal bus 440. Additionally, the operator station server 420 is connected to industrial devices such as controllers, I/O modules, etc., via a plant bus 415. The operator station server 420 further comprises an alarm manager 435 and a process image 430.

The process image 430 contains the plurality of tags as utilized in the engineering data. The tags (also referred to as Equipment hierarchy alarm status or EQHA tags) are stored in the process image. The tags are configured to receive alarm status from the equipment associated with them. Additionally, the tags also contain a path specification for the process engineering part of the technological hierarchy to which it refers. An alarm status is also stored for each process object in the process image and an indication of the path in which the process object is located. When an alarm is reported, the alarm manager 435 calculates the alarm status of the relevant process object and the path of the affected process part once via the process image 430. The alarm manager 435 is then configured to send the alarm information and the path specifications to the visualization server 425. The visualization server is then configured to update the hierarchy of graphical objects accordingly. Changes to the EQHA tags affect the hierarchy of graphical objects.

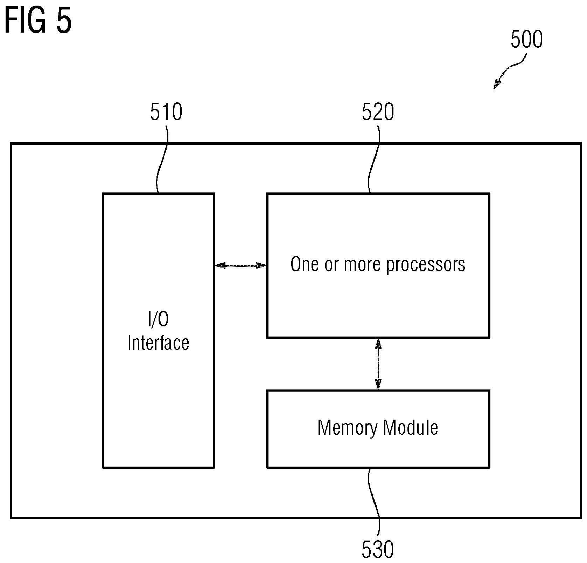

The above mentioned method 200 may further realized in one or more devices. The current disclosure describes a device 500 which is further described in relation to figure 5.

Figure 5 illustrates a device 500 for generating visual alarms in the industrial facility. The device 500 comprises an input-output interface 510 for communicating with the plurality of industrial devices; and one or more processors 520 connected to a memory module 530. The memory module 530 (also referred to as non-transitory storage medium 530) includes a plurality of instructions which when executed on the one or more processors 520, cause the one or more processors 520 to generate a first set of graphical objects associated with the plurality of sections, wherein each graphical object from the first set of graphical objects represents a corresponding section from the plurality of sections; generate a second set of graphical objects associated with the industrial devices, each graphical object from the second set of graphical objects represents an industrial device; generate a hierarchy based on the first set of graphical objects and the second set of graphical objects, wherein each graphical object from the second set of graphical objects is associated with a graphical object from the first set of graphical object; receive process status information, the process status information indicative of status of one or more industrial devices; and update the hierarchy by annotating one or more graphical objects based on the process status information.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein.

The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non transitory storage medium claims.

## Claims

1. A method (200) of generating visual alarms in an industrial facility, the industrial facility comprising a plurality of sections, each section comprising a plurality of industrial devices associated with one or more processes, the method (200) comprising:
a. Generating (210) a first set of graphical objects (130, 133, 137, 140, 145, 147) associated with the plurality of sections, wherein each graphical object from the first set of graphical objects (130, 133, 137, 140, 145, 147) represents a corresponding section from the plurality of sections;
b. Generating (220) a second set of graphical objects (150, 155, 160, 170, 175) associated with the industrial devices, each graphical object from the second set of graphical objects (150, 155, 160, 170, 175) represents an industrial device;
c. Generating (230) a hierarchy (110) based on the first set of graphical objects (130, 133, 137, 140, 145, 147) and the second set of graphical objects (150, 155, 160, 170, 175), wherein each graphical object from the second set of graphical objects (150, 155, 160, 170, 175) is associated with a graphical object from the first set of graphical objects (130, 133, 137, 140, 145, 147);
d. Receiving (240) process status information, the process status information indicative of status of one or more industrial devices; and
e. Updating (250) the hierarchy by annotating one or more graphical objects based on the process status information for displaying the visual alarms.

2. The method (200) as claimed in claim 1, wherein each section from the plurality of sections is associated with at least one process from the one or more processes.

3. The method (200) as claimed in claim 1, wherein the method (200) further comprises receiving engineering data associated with the industrial facility from one or more engineering tools, the engineering data comprising information associated with the plurality of sections of the industrial facility.

4. The method (200) as claimed in claim 1, wherein annotating the one or more graphical objects includes modifying at least one of a colour and text of a graphical object from the one or more graphical objects based on the process status information.

5. The method (200) as claimed in claim 1, wherein annotating the one or more graphical objects include annotating a first graphical object from the first set of graphical objects (130, 133, 137, 140, 145, 147) based on one or more annotations of one or more graphical object from the second set of graphical objects (150, 155, 160, 170, 175) associated with the one or more industrial devices in the section associated with the at first graphical object.

6. The method (200) as claimed in claim 1, wherein the hierarchy includes a second graphical object and a third graphical object from the first set of graphical objects (130, 133, 137, 140, 145, 147), wherein the second graphical object is subordinate to the third graphical object.

7. An industrial device (500) for generating visual alarms in an industrial facility, the industrial facility comprising a plurality of sections, each section comprising a plurality of industrial devices associated with one or more processes, the industrial device comprising:
a. One or more processors (520) connected to a memory module (530), the one or more processors (520) configured to:
i. generate a first set of graphical objects (130, 133, 137, 140, 145, 147) associated with the plurality of sections, wherein each graphical object from the first set of graphical objects (130, 133, 137, 140, 145, 147) represents a corresponding section from the plurality of sections;
ii. generate a second set of graphical objects (150, 155, 160, 170, 175) associated with the industrial devices, each graphical object from the second set of graphical objects (150, 155, 160, 170, 175) represents an industrial device;
iii. generate a hierarchy (110) based on the first set of graphical objects (130, 133, 137, 140, 145, 147) and the second set of graphical objects (150, 155, 160, 170, 175), wherein each graphical object from the second set of graphical objects^(150, 155, 160, 170, 175) is associated with a graphical object from the first set of graphical objects (130, 133, 137, 140, 145, 147);
iv. receive process status information, the process status information indicative of status of one or more industrial devices; and
v. update the hierarchy (110) by annotating one or more graphical objects based on the process status information for display of the visual alarms.

8. A non transitory storage medium (530) comprising a plurality of instructions, which when executed on one or more processors (520), cause the one or more processors (520) to:
a. generate a first set of graphical objects (130, 133, 137, 140, 145, 147) associated with the plurality of sections, wherein each graphical object from the first set of graphical objects (130, 133, 137, 140, 145, 147) represents a corresponding section from the plurality of sections;
b. generate a second set of graphical objects (150, 155, 160, 170, 175) associated with the industrial devices, each graphical object from the second set of graphical objects (150, 155, 160, 170, 175) represents an industrial device;
c. generate a hierarchy (110) based on the first set of graphical objects (130, 133, 137, 140, 145, 147) and the second set of graphical objects (150, 155, 160, 170, 175), wherein each graphical object from the second set of graphical objects^(150, 155, 160, 170, 175) is associated with a graphical object from the first set of graphical objects (130, 133, 137, 140, 145, 147);
d. receive process status information, the process status information indicative of status of one or more industrial devices; and
e. update the hierarchy (110) by annotating one or more graphical objects based on the process status information for display of visual alarms.
